# EUROPEAN PATENT APPLICATION

(11) **EP 3 869 488 A1**
(43) Date of publication of application: **25.08.2021**
(21) Application number: 19872464.3
(22) Date of filing: 13.10.2019
(51) Int. Cl.: G09B 23/30

(54) **ORGAN MODEL FIXING TOOL FOR THORACIC CAVITY SIMULATOR**

(30) Priority: 15.10.2018 WO PCT/JP2018/038385
(71) Applicant: Fasotec Co., Ltd., Chiba-shi, Chiba 261-8501 (JP)
(72) Inventor: TAKEUCHI, Junichi, Chiba-shi, Chiba 261-8501 (JP); MIYAMOTO, Takafumi, Chiba-shi, Chiba 261-8501 (JP); ANRAKU, Takeshi, Chiba-shi, Chiba 261-8501 (JP); OKAMOTO, Masashi, Chiba-shi, Chiba 261-8501 (JP)
(74) Representative: Fleck, Hermann-Josef
(86) International application number: PCT/JP2019/040346
(87) International publication number: WO 2020/080318

(57) **Abstract**

Provided is an organ model fixing tool that easily enables stable fixing, attachment/detachment, and positional adjustment of an organ model in a state where a thoracic cavity simulator is tilted. This fixing tool is for fixing the posture of an organ model with respect to a thoracic cavity simulator that is provided with a human body skeleton model imitating at least the backbones, the breast bones, and the ribs. The fixing tool is provided with: a base that can be housed inside the rib part of the thoracic cavity simulator; a backbone engaging mechanism that is provided to the backside of the base, and that is to be engaged with a projected part of the backbone part of the thoracic cavity simulator so as to be attached in a slidable manner in the longitudinal direction of the backbone part; a longitudinal partition that is provided to the surface of the base so as to partition the base left and right, wherein the organ model can be placed on both the left and right surfaces of the longitudinal partition, and the length of the longitudinal partition in the longitudinal direction of the backbone part is roughly equal to that in the longitudinal direction of the breast bone part.

## Description

### [Technical Field]

The present invention relates to an instrument for attaching an organ model to a thoracic cavity simulator for training or learning of thoracoscopic surgery.

### [Background Art]

In recent years, simulators have been developed that can reproduce the human body shape and texture and simulate the surgical environment for the human body for training and learning of thoracoscopic surgery. (for example, refer to Patent Document 1)

The thoracic cavity simulator disclosed in Patent Document 1 is a device including at least a human skeleton model simulating ribs and a casing for accommodating the human skeleton model. The rib part of the casing is provided with an opening, and the diaphragm part of the casing can be opened and closed, and the organ model can be stored inside the rib of the human skeleton model. According to this device, it is possible to effectively train the procedure of thoracoscopic surgery.

Then, as a method of attaching the organ model to the simulator of Patent Document 1, for example, a gripping member provided with an engaging portion is used.

Since the thoracic cavity simulator disclosed in Patent Document 1 is premised on training in the supine position, sufficient disclosure has not been disclosed about in case of the thoracic cavity simulator is fixed in a state of being tilted to the left or right. However, depending on the target site and surgical procedure of the operation, the operation may be performed in the lateral decubitus position. Therefore, in case of the operation is performed in the lateral decubitus position, an instrument capable of fixing the organ model at an appropriate angle is desired.

As a technique in which an organ model can be installed in a tilted state, a training organ installation device is known. The device is that a net is attached to a hook provided in the device body, and a tubular organ is inserted into the net and is fixed by sewing with a suture thread. (for example, refer to Patent Document 2) In such the training organ installation device, a polygonal leg portion is provided for enabling the device body to rotate, and the angle of the device can be changed during training. In the training organ installation device disclosed in Patent Document 2, there is an advantage that the morphology of a tubular organ curved vertically and horizontally can be accurately reproduced. However, for accurate installation, it is necessary not only to insert the tubular organ into the net but also to perform suturing work, which causes a problem that the installation work is complicated.

There is also a problem that the training organ installation device disclosed in Patent Document 2 can not be used for an organ model such as a lung.

### [Prior Art]

### [Patent Document]

[Patent Document 1] WO 2015/151503
[Patent Document 2] JP 3177527 U

### [Outline of the Invention]

### [Problems to be Solved by the Invention]

In view of such a situation, it is an object of the present invention to provide an organ model fixing tool that easily enables stable fixing, attachment/detachment, and positional adjustment of an organ model in a state where a thoracic cavity simulator is tilted.

### [Means to Solve the Objects]

In order to solve the above problem, the organ model fixing tool of the present invention is for fixing the posture of an organ model with respect to a thoracic cavity simulator that is provided with a human body skeleton model imitating at least the backbones, the breast bones, and the ribs. The fixing tool is provided with: a base that can be housed inside the rib part of the thoracic cavity simulator; a backbone engaging mechanism that is provided to the backside of the base, and that is to be engaged with a projected part of the backbone part of the thoracic cavity simulator so as to be attached in a slidable manner in the longitudinal direction of the backbone part; a longitudinal partition that is provided to the surface of the base so as to partition the base left and right, wherein the organ model can be placed on both the left and right surfaces of the longitudinal partition, and the length of the longitudinal partition in the longitudinal direction of the backbone part is roughly equal to that in the longitudinal direction of the breast bone part.

By providing the backbone engaging mechanism on the back surface of the base, the organ model fixing tool can be firmly fixed to the thoracic cavity simulator.

By providing the longitudinal partition, the organ model can be stably installed even when the thoracic cavity simulator is used in a tilted state. In addition, since both the left and right sides can be used for organ model installation, various variations of procedure training are possible.

In the longitudinal partition, the longitudinal length of the backbone is approximately the same as the longitudinal length of the breast bone part, so that the organ model installed in the thoracic cavity simulator can be firmly supported.

In the organ model fixing tool for the thoracic cavity simulator of the present invention, the base may further provide a slide mechanism capable of sliding the longitudinal partition between the left end and the right end of the surface.

In case of reproducing a state close to actual surgery, it is preferable that the space for arranging the organ model can be adjusted. By providing the above slide mechanism, the position of the longitudinal partition can be adjusted to the left and right to adjust the space for arranging the organ model. This enables realistic procedure training that is closer to actual surgery.

In case of the base of the organ model fixing tool for the thoracic cavity simulator of the present invention further provides the slide mechanism capable of sliding the longitudinal partition, the slide mechanism preferably provides an arm portion that connects to the longitudinal partition, an arm drive portion that rotates the end portion of the arm portion on the surface of the base, and a guide portion that defines the movement direction and movement range of the longitudinal partition. Here, the guide portion is composed of a shaft member provided on the surface of the base and a shaft stopper for holding both ends of the shaft member, and the shaft member is inserted into a through hole provided in the longitudinal partition.

Since the slide mechanism provides the arm portion and the arm drive portion, the position of the longitudinal partition can be adjusted with a simple operation. A known worm gear is preferably used as the structure of the arm portion and the arm drive portion. That is, one end of the arm portion is connected to the longitudinal partition, and the other end is provided with a worm wheel. Further, a cylindrical worm is provided in the arm driving portion, and a knob for user operation is provided at the end of the worm. By rotating the knob, the user can rotate the end of the arm portion on the surface of the base. By using the worm gear, even if pressure is applied to the surface of the longitudinal partition, the knob does not rotate easily, so it is possible to fix the position of the longitudinal partition simply by releasing the hand that operates the knob.

Further, by providing the guide portion, the moving direction and the moving range of the longitudinal partition can be defined. Specifically, it is preferable that the longitudinal partition has a structure capable of parallel translating between the left end and the right end of the surface of the base. By configuring the shaft member to be inserted through a through hole provided in the longitudinal partition, the moving direction of the longitudinal partition can be defined with a simple structure. It is preferable that two shaft members are provided. Since both ends of the shaft member are held by the shaft stoppers, the moving range of the longitudinal partition can be easily defined. By the guide portion the movement of the end portion of the arm portion rotating on the surface of the pedestal converts into a left-right parallel movement.

In this way, the arm portion, the arm drive unit, and the guide portion function as one, so that the rotational movement of the knob can be converted into the parallel movement of the longitudinal partition with a relatively simple structure. So, the position of the longitudinal partition can be easily adjusted and fixed.

In the organ model fixing tool for the thoracic cavity simulator of the present invention, the base may further provide an attachment mechanism capable of detachably attaching the longitudinal partition to the left end or the right end of the surface.

By providing the above attachment mechanism, the space for arranging the organ model can be adjusted with a simple structure and operation. As the attachment mechanism, it is preferable to use a mechanism in which one member is locked to the other member and fixed by a rotating claw, and a mechanism in which one member is fitted to the other member and fixed by a claw portion. The structure is not limited to this, and only any of the above mechanisms may be used, or for example, a mechanism for fixing with a fastener such as a screw may be used.

In the organ model fixing tool for the thoracic cavity simulator of the present invention, it is preferable that hook-and-loop fasteners are formed on both the left and right surfaces of the longitudinal partition.

Some of the surface materials of the organ model perform the same function as the loop portion of the hook-and-loop fastener. By forming the hooks of hook-and-loop fastener on the left and right surfaces of the longitudinal partition, the surface of the organ model can be brought into contact with the hooks to firmly fix the organ model, and the organ model can be easily removed and adjusted in position.

By providing hook-and-loop fasteners on both the left and right surfaces of the longitudinal partition, the organ model can be stably installed regardless of whether the thoracic cavity simulator is in the right lateral decubitus position or the left lateral decubitus position. Here, the right lateral decubitus position is a posture in which the right side is down, and the left lateral decubitus position is a posture in which the left side is down.

Further, fixing mechanisms other than the hook-and-loop fastener may be provided on the left and right surfaces of the longitudinal partition, for example, by providing a suction cup or applying an adhesive.

It is preferably that the organ model fixing tool for the thoracic cavity simulator of the present invention loads the organ model on the right side of the longitudinal partition in case of the posture of the thoracic cavity simulator is in the left lateral decubitus position, and the organ model fixing tool loads the organ model on the left side of the longitudinal partition in case of the posture of the thoracic cavity simulator is in the right lateral decubitus position.

Here, the left and right sides of the longitudinal partition surface are along the left and right sides of the structure of the human body, and the right-hand side is the right side and the left-hand side is the left side with the fixing tool in the attached state to the thoracic cavity simulator.

In the organ model fixing tool for the thoracic cavity simulator of the present invention, the organ model is preferably a biological texture organ model of the lung that at least reproduces the shape and texture of the lung.

The shape and texture of the lung include the shape and texture of blood vessels in the hilum and inside the lung. In addition, it is preferable that the trachea, membrane, lymph, pleura, and pulmonary ligament are also reproduced in the biological texture organ model of the lung.

In the organ model fixing tool for the thoracic cavity simulator of the present invention, the backbone attachment mechanism may be provided with a concave portion or a convex portion that can adjust the attachment position on the backbone portion in a stepwise manner.

By providing the backbone attachment mechanism with a concave portion or a convex portion, it is possible to adjust the attachment position of the fixing tool in a stepwise manner. Further, by providing the shape of the concave portion or the convex portion to be small, the fixing tool may be fixed at an arbitrary position substantially steplessly.

In the organ model fixing tool for the thoracic cavity simulator of the present invention, the base, the backbone engagement mechanism, and the longitudinal partition may be integrally molded with resin. By being integrally molded with resin, the organ model can be firmly fixed to the fixing tool and easy to handle.

### [Effects of the Invention]

According to the organ model fixing tool for the thoracic cavity simulator of the present invention, the organ model enables stably fixing in a state where the thoracic cavity simulator is tilted, and there is an effect that attachment/detachment and position adjustment enables easily performing.

### [Brief Description of the Drawings]

[Fig. 1] Figure 1 shows a perspective view of a lung model fixing tool of Embodiment 1.
[Fig. 2] Figure 2 shows a front view of a lung model fixing tool of Embodiment 1.
[Fig. 3] Figure 3 shows a rear view of a lung model fixing tool of Embodiment 1.
[Fig. 4] Figure 4 shows a left side view of a lung model fixing tool of Embodiment 1.
[Fig. 5] Figure 5 shows a right side view of a lung model fixing tool of Embodiment 1.
[Fig. 6] Figure 6 shows an external view of a lung model fixing tool of Embodiment 1.
[Fig. 7] Figure 7 shows an explanatory view of a lung model fixing tool of Embodiment 1.
[Fig. 8] Figure 8 shows an explanatory view 1 for attachment to a thoracic cavity simulator of a lung model fixing tool of Embodiment 1.
[Fig. 9] Figure 9 shows an explanatory view 2 for attachment to a thoracic cavity simulator of a lung model fixing tool of Embodiment 1.
[Fig. 10] Figure 10 shows an external view of a state after attachment of a lung model fixing tool of Embodiment 1.
[Fig. 11] Figure 11 shows a bottom view 1 of a state after attachment of a lung model fixing tool of Embodiment 1.
[Fig. 12] Figure 12 shows a bottom view 2 of a state after attachment of a lung model fixing tool of Embodiment 1.
[Fig. 13] Figure 13 shows a flow chart of how to use of a lung model fixing tool of Embodiment 1.
[Fig. 14] Figure 14 shows a structural explanatory view of a lung model fixing tool of Embodiment 2.
[Fig. 15] Figure 15 shows an external view of a state after attachment of a lung model fixing tool of Embodiment 2.
[Fig. 16] Figure 16 shows a perspective view of a thoracic cavity simulator.
[Fig. 17] Figure 17 shows an external view 1 of a thoracic cavity simulator.
[Fig. 18] Figure 18 shows an external view 2 of a thoracic cavity simulator.
[Fig. 19] Figure 19 shows an external view 3 of a thoracic cavity simulator.
[Fig. 20] Figure 20 shows a perspective view of a lung model fixing tool of Embodiment 3.
[Fig. 21] Figure 21 shows a front view of a lung model fixing tool of Embodiment 3.
[Fig. 22] Figure 22 shows a rear view of a lung model fixing tool of Embodiment 3.
[Fig. 23] Figure 23 shows a left side view of a lung model fixing tool of Embodiment 3.
[Fig. 24] Figure 24 shows a right side view of a lung model fixing tool of Embodiment 3.
[Fig. 25] Figure 25 shows an external view of a lung model fixing tool of Embodiment 3.
[Fig. 26] Figure 26 shows an explanatory view 1 of slide mechanism.
[Fig. 27] Figure 27 shows an explanatory view 2 of slide mechanism.
[Fig. 28] Figure 28 shows an explanatory view for attachment to a thoracic cavity simulator of a lung model fixing tool of Embodiment 3.
[Fig. 29] Figure 29 shows an external view 1 of a state after attachment of a lung model fixing tool of Embodiment 3.
[Fig. 30] Figure 30 shows an external view 2 of a state after attachment of a lung model fixing tool of Embodiment 3.
[Fig. 31] Figure 31 shows an image view of a state after attachment of a lung model fixing tool of Embodiment 3.
[Fig. 32] Figure 32 shows a flow chart of how to use of a lung model fixing tool of Embodiment 3.
[Fig. 33] Figure 33 shows a perspective view of a lung model fixing tool of Embodiment 4.
[Fig. 34] Figure 34 shows a front view of a lung model fixing tool of Embodiment 4.
[Fig. 35] Figure 35 shows a rear view of a lung model fixing tool of Embodiment 4.
[Fig. 36] Figure 36 shows an external view of a lung model fixing tool of Embodiment 4.
[Fig. 37] Figure 37 shows a left side view of a lung model fixing tool of Embodiment 4.
[Fig. 38] Figure 38 shows a right side view of a lung model fixing tool of Embodiment 4.
[Fig. 39] Figure 39 shows a flow chart of how to use of a lung model fixing tool of Embodiment 4.

### [Best Mode for Carrying Out the Invention]

Embodiments of the present invention will be described in detail below with reference to the drawings. The present invention is not limited to the following embodiment and examples of shown in the figure, and the present invention can be variously changed in design.

### [Embodiment 1]

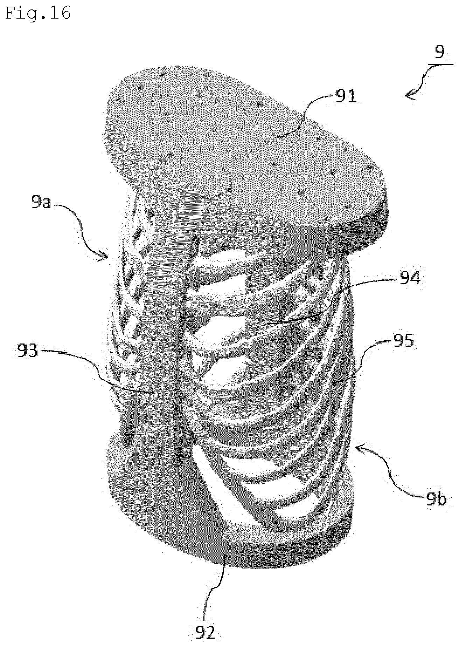

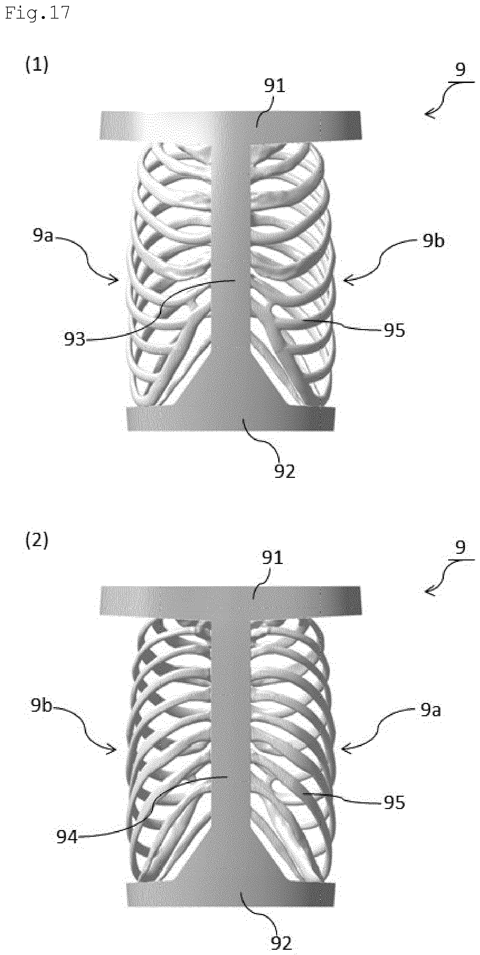

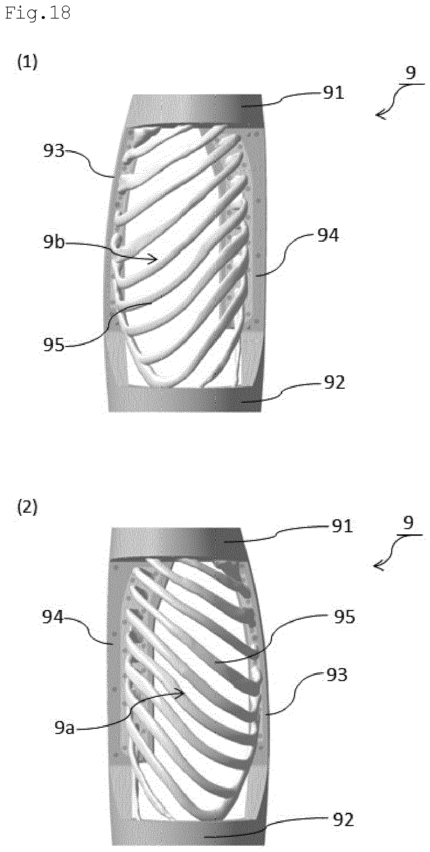

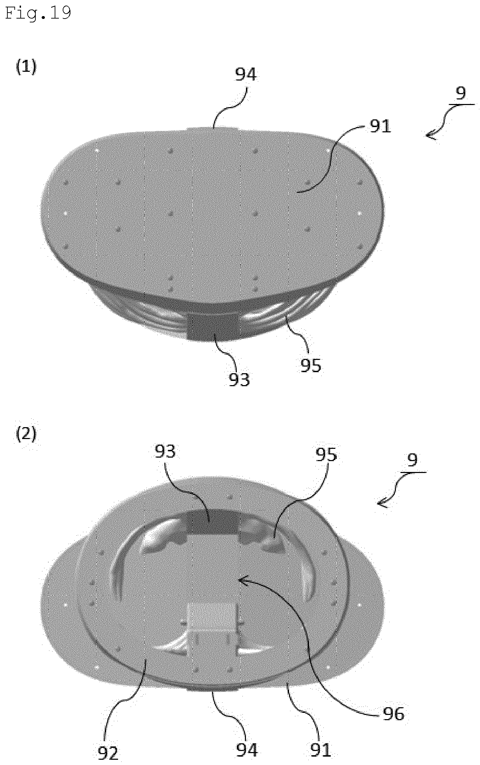

First, the structure of the thoracic cavity simulator to which the organ model fixing tool is attached will be described. Fig. 16 shows the perspective view of the thoracic cavity simulator. Further, Figs. 17 to 19 show external views of the thoracic cavity simulator. Fig. 17 (1) shows the front view. Fig. 17 (2) shows the rear view. Fig. 18 (1) shows the right side view. Fig. 18 (2) shows the left side view. Fig. 19 (1) shows the plan view. Fig. 19 (2) shows the bottom view.

As shown in Fig. 16, the thoracic cavity simulator 9 is composed of the upper end 91, the lower end 92, the breast bone portion 93, the backbone portion 94, and the rib portion 95. The upper end 91 is provided at the upper ends of the breast bone portion 93 and the backbone portion 94, and the lower end 92 is provided at the lower ends. The rib portion 95 is fixed to the breast bone portion 93 and the backbone portion 94. Further, as shown in Fig. 19 (2), the lower end 92 is provided with the through hole 96 for attaching the organ model (not shown). As described above, the thoracic cavity simulator 9 has the shape simulating the chest of the human body.

In case of performing lung surgery, surgery is often performed in the lateral decubitus position, and depending on the surgical procedure, it is necessary to install the thoracic cavity simulator 9 so that the right side part 9a and the left side part 9b shown in Figs. 17 (1) and 17 (2) face downward .

However, as shown in Figs. 18 (1) and 18 (2), the inside of the thoracic cavity simulator 9 is not provided with a portion corresponding to the mediastinum. Therefore, even if the lung model is installed, there is a problem that the lung model cannot be held in the lateral decubitus position. Therefore, even when the thoracic cavity simulator 9 is fixed sideways, the fixing tool capable of stably supporting the organ model is required.

In the thoracic cavity simulator 9, the right side part 9a and the left side part 9b are used, but the left and right sides are assumed to be along the left and right sides in the structure of the human body. That is, the right hand side is the right side part 9a, and the left hand side is the left side part 9b.

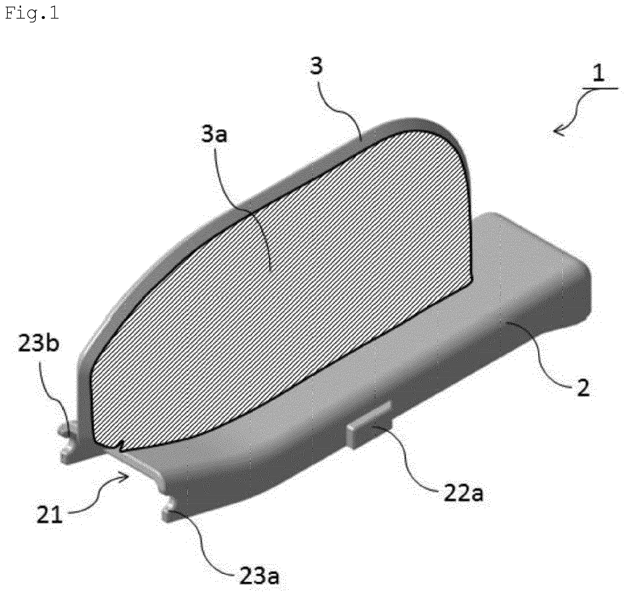

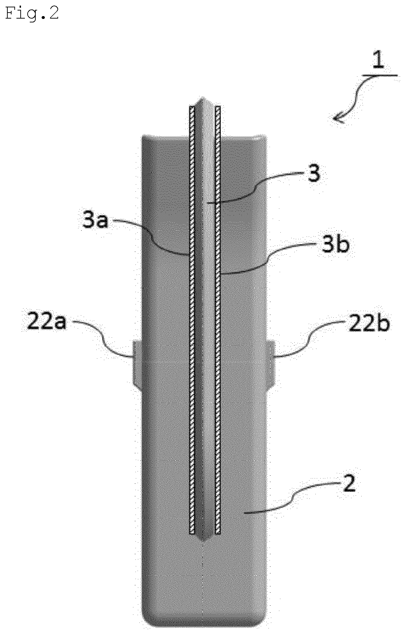

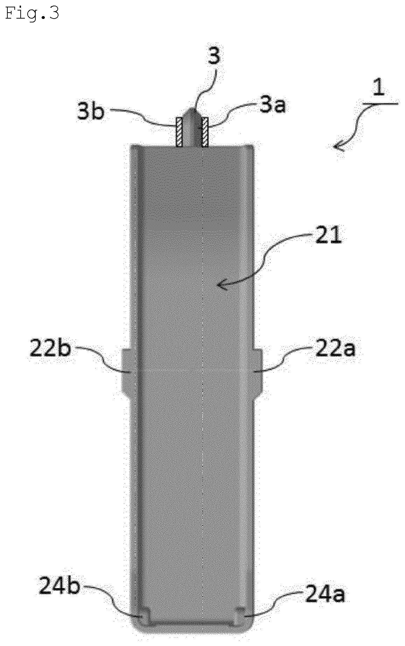

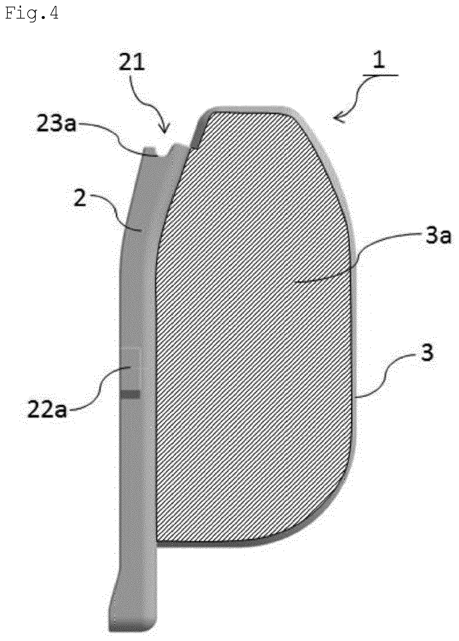

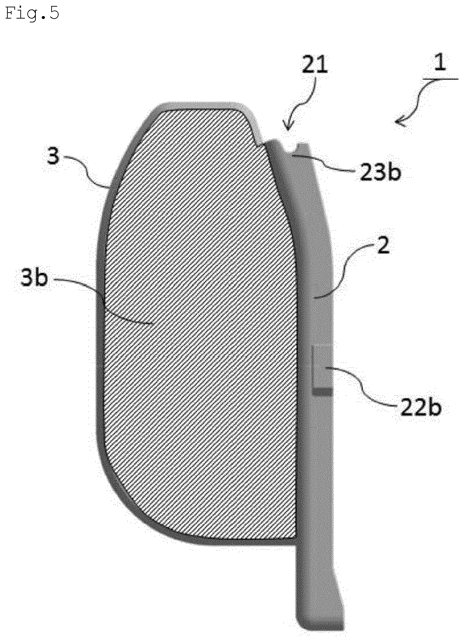

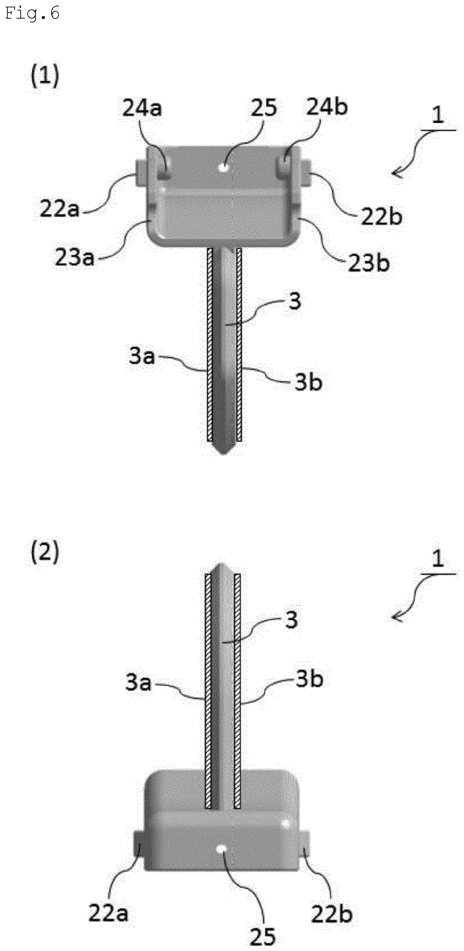

Next, the structure of the lung model fixing tool will be described. Figs. 1 to 6 show external views of the lung model fixing tool. Specifically, Fig. 1 shows the perspective view. Fig. 2 shows the front view. Fig. 3 shows the rear view. Fig. 4 shows the left side view. Fig. 5 shows the right side view. Fig. 6 (1) shows the plan view. Fig. 6 (2) shows the bottom view.

As shown in Fig. 1, the lung model fixing tool 1 is composed of the base 2 and the longitudinal partition 3, and the base 2 and the longitudinal partition 3 are both made of resin and integrally molded.

The recess 21 for attaching to the thoracic cavity simulator 9, the non-slip mechanisms (22a, 22b) shown in Fig. 2, the concave engaging parts (23a, 23b) shown in Fig. 1, the convex engaging parts (24a, 24b) shown in Fig. 3, and the female screw portion 25 shown in Fig. 6 are provided in the base 2. The concave engaging parts (23a, 23b), the convex engaging parts (24a, 24b), and the female screw part 25 are backbone engagement mechanisms.

The recess 21 is provided for attaching the lung model fixing tool 1 to the thoracic cavity simulator 9, and has the structure in which the backbone portion 94 of the thoracic cavity simulator 9 is fitted into the recess 21.

The non-slip mechanisms (22a, 22b) are for facilitating the grip of the lung model fixing tool 1 in case of attaching or detaching. That is, since the lung model fixing tool 1 is provided with the longitudinal partition 3 substantially perpendicular to the base 2, it has the structure that is difficult to grasp with one hand. Therefore, non-slip mechanisms (22a, 22b) are provided so that any finger of the operator can easily get caught in the non-slip mechanisms (22a, 22b), which facilitates attachment / detachment.

The concave engaging parts (23a, 23b) and the convex engaging parts (24a, 24b) are provided for positioning and fixing. The structure is such that the convex engaging part (not shown) provided on the backbone portion 94 of the thoracic cavity simulator 9 and the concave engaging parts (23a, 23b) are engaged, and the concave engaging part (not shown) provided on the backbone portion 94 of the thoracic cavity simulator 9 and the convex engaging parts (24a, 24b) are engaged.

The female screw part 25 is provided to fix the lung model fixing tool 1 and the backbone portion 94 using the screw (not shown) after the backbone portion 94 of the thoracic cavity simulator 9 and the lung model fixing tool 1 are engaged with each other.

As shown in Fig. 2, the longitudinal partition 3 is made of the plate-shaped member and simulates the mediastinum in the human body. The organ model of the left lung can be attached to the left surface of the longitudinal partition 3, and the organ model of the right lung can be attached to the right surface. Therefore, it is possible to perform both left and right lung surgical training.

A hook-and-loop fastener 3a is provided on the right surface of the longitudinal partition 3, and the hook-and-loop fastener 3b is provided on the left surface. Here, too, the left and right sides are along the left and right sides in the structure of the human body as same in the right side part 9a and the left side part 9b in the thoracic cavity simulator 9. So, the left side surface of the longitudinal partition 3 in Fig. 2 is the right side surface, and the right side surface of the longitudinal partition 3 is the left side surface.

The hook-and-loop fasteners (3a, 3b) are both formed by hook portions of the hook-and-loop fastener. Since the surface of the lung model 4 described later can play the same role as the loop portion of the hook-and-loop fastener in terms of material, the mounting position of the lung model 4 can be freely adjusted on the hook-and-loop fasteners (3a, 3b).

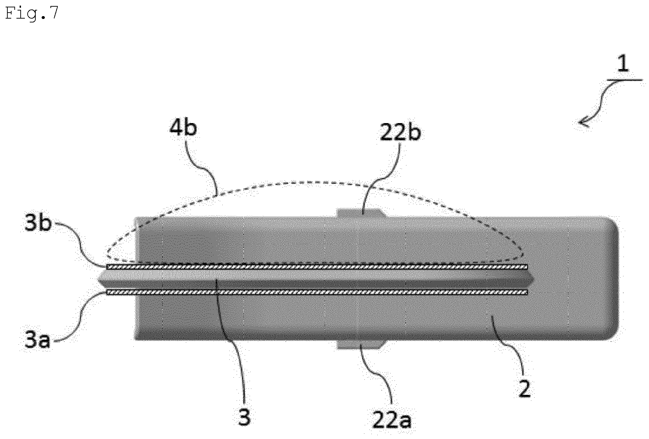

Fig. 7 is the explanatory view of the lung model fixing tool of Embodiment 1. As shown in Fig. 7, here, the lung model 4b is attached to the hook-and-loop fastener 3b. The lung model 4b is the organ model simulating the left lung, and shows the image in case of training for surgery on the left lung.

The surface material of the lung model 4b functions in the same manner as the loop portion of the hook-and-loop fastener. So, since the surface of the lung model 4b comes into contact with the hook-and-loop fastener 3b provided in the longitudinal partition 3, the loop portion and the hook portion of the hook-and-loop fastener 3b are engaged and firmly fixed. Further, since the longitudinal partition 3 is integrally molded with the base 2, for example, even if the lung model 4b is pressed from above by forceps or the like, the three-dimensional position of the lung model 4b is anatomically accurate and the lung model 4b can be supported in accurate place.

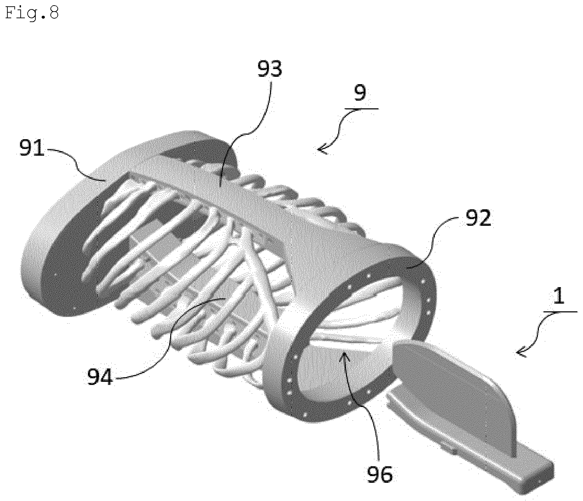

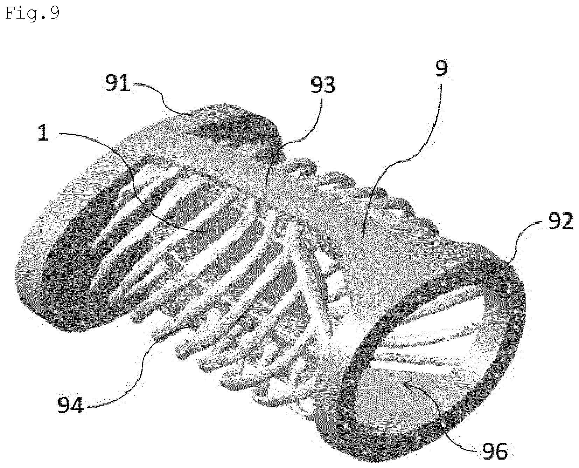

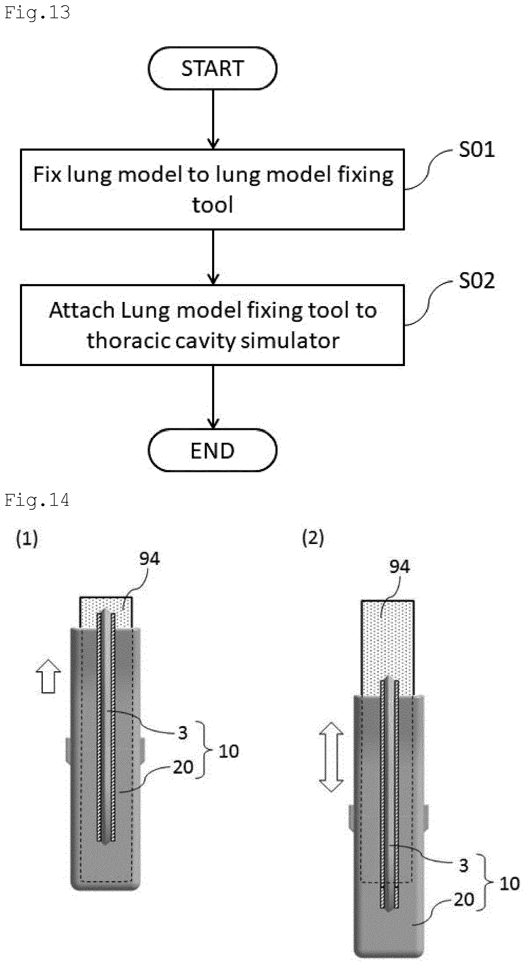

Fig. 8 and Fig. 9 are explanatory views of attachment of the lung model fixing tool of Embodiment 1 to the thoracic cavity simulator, Fig. 8 shows the state before attachment, and Fig. 9 shows the state after attachment. Further, Fig. 13 shows the flow chart of use of the lung model fixing tool of Embodiment 1.

Although the lung model is not shown in Fig. 8, in case of the lung model fixing tool of Embodiment 1 is actually used, as shown in Fig. 13, the lung model is first fixed to the lung model fixing tool 1 (Step S01). Then, the lung model fixing tool 1 is inserted into the thoracic cavity simulator 9 through the through hole 96, and the lung model fixing tool 1 is attached to the backbone portion 94 (step S02).

The lung model may be fixed to the lung model fixing tool 1 after the lung model fixing tool 1 is attached to the thoracic cavity simulator 9. Further, the fixed position of the lung model can be adjusted with the lung model fixing tool 1 in state of attached to the thoracic cavity simulator 9, or the lung model fixing tool 1 may be removed from the thoracic cavity simulator 9 for adjustment and then be reattached.

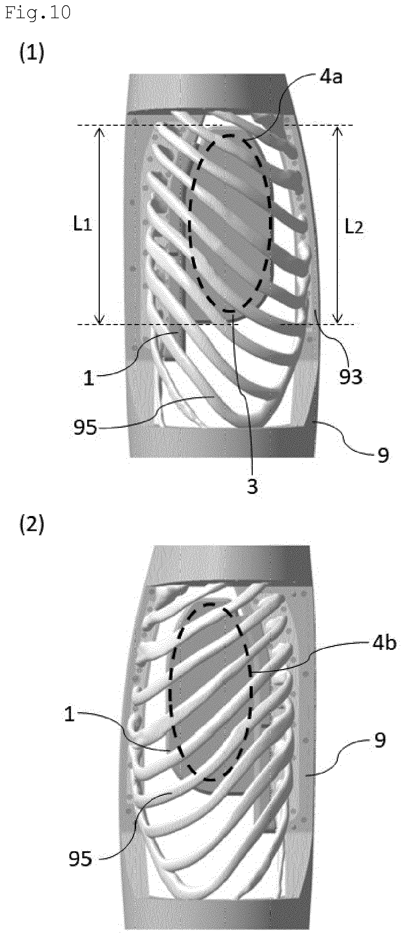

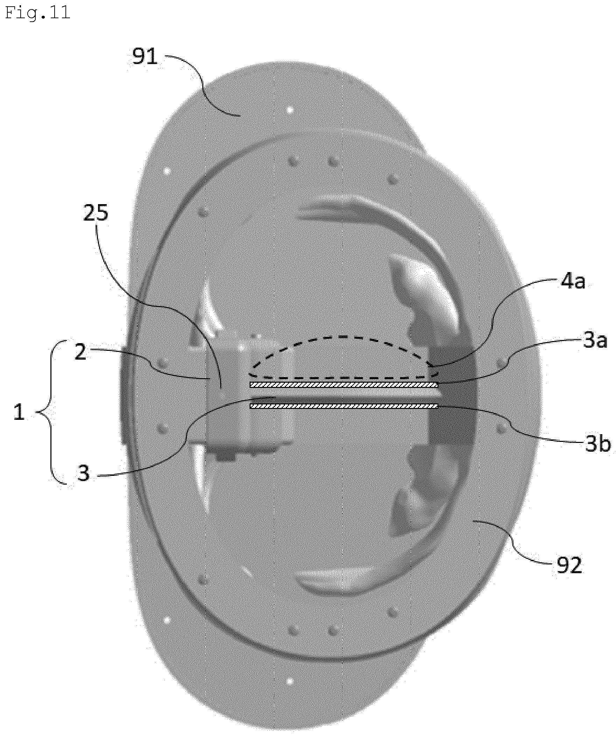

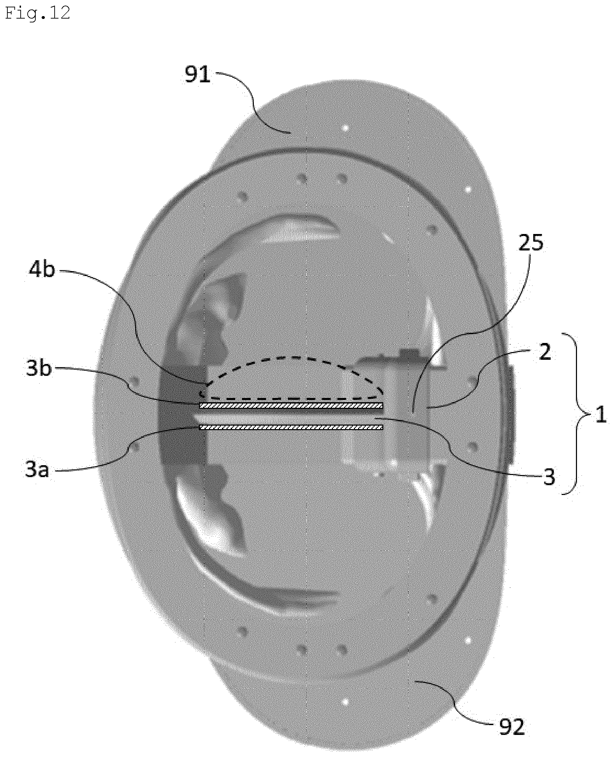

Fig. 10 is the external view showing the state after attachment of the lung model fixing tool of Embodiment 1, and Fig. 11 and Fig. 12 are bottom views showing the state after attachment of the lung model fixing tool of Embodiment 1. Fig. 10 (1) and Fig. 11 show the case where the lung model of the right lung is attached, and Fig. 10 (2) and Fig. 12 show the case where the lung model of the left lung is attached.

As shown in Fig. 10 (1), the length L₁ of the longitudinal partition 3 in the lung model fixing tool 1 is substantially the same as the length L₂ of the breast bone portion 93.

In case of training in the lateral decubitus position using the lung model 4a of the right lung, the lung model 4a of the right lung is attached to the lung model fixing tool 1 as shown in Fig. 11. The lung model 4a is fixed to the lung model fixing tool 1 by the hook-and-loop fastener 3a, and the lung model fixing tool 1 is firmly fixed to the thoracic cavity simulator 9. So, the state as if the left lung exists above the mediastinum is created, and realistic training is possible. The surgeon (not shown) inserts forceps or the like through the gap of the rib portion 95 shown in Fig. 10 (1) to perform training.

Similarly, in case of training in the lateral decubitus position using the left lung lung model 4b, the left lung lung model 4b is attached to the lung model fixing tool 1 for training as shown in Fig. 12.

In this way, it is possible to train on both the left and right lung. Further, as described above, since the fixed position of the lung models (4a, 4b) can be finely adjusted, more realistic training assuming actual surgery is possible.

### [Embodiment 2]

Inside the skeleton of the human body, the lungs are located in the generally fixed position, but the position and size may differ slightly from person to person. Even in such the case, it is desirable to be able to perform the procedure training based on the positional relationship between the skeleton and the lungs according to the actual situation.

Fig. 14 shows the structural explanatory view of the lung model fixing tool of Embodiment 2. As shown in Fig. 14, the lung model fixing tool 10 of Embodiment 2 is composed of the base 20 and the longitudinal partition 3, and the base 20 and the longitudinal partition3 are both made of resin and integrally molded.

Although not shown, the base 20 is provided with the mechanism capable of fixing the lung model fixing tool 10 at the arbitrary position on the backbone portion 94. Therefore, as shown in Fig. 14 (1), the lung model fixing tool 10 can be fixed upward so that the lower portion of the backbone portion 94 and the lower portion of the lung model fixing tool 10 are firmly fitted. As shown in 14 (2), the lung model fixing tool 10 can be slid and fixed below the backbone portion 94.

This makes it possible to more flexibly adjust the fixed position of the lung model.

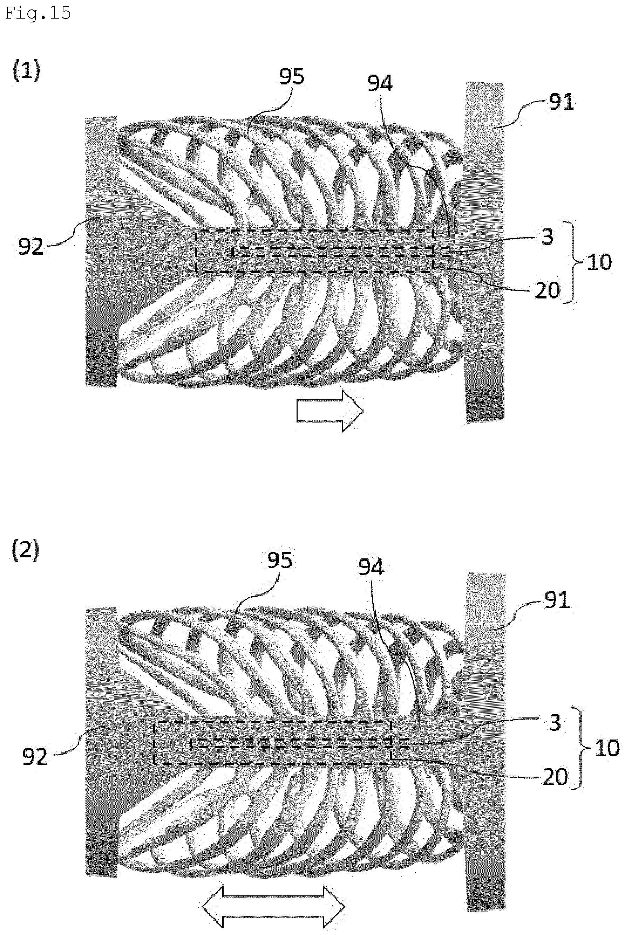

Fig. 15 is the external view showing the state after attachment of the lung model fixing tool of Embodiment 2. Fig. 15 (1) shows the case where the lung model fixing tool is fixed upward, and Fig. 15 (2) shows the case where the lung model fixing tool is fixed downward. In each case, the thoracic cavity simulator 9 is in the lateral decubitus position, assuming that the left lung is to be trained.

In case of the lung model fixing tool is fixed upward, as shown in Fig. 15 (1), the lung model fixing tool 10 is fixed at the position closer to the upper end 91, that is, on the right side. On the other hand, in case of the lung model fixing tool is fixed downward, the lung model fixing tool 10 is fixed at the position closer to the lower end 92, that is, on the left side, as shown in Fig. 15 (2). In this way, by using the lung model fixing tool 10, it is possible to easily fine-tune the attachment position of the lung model without attaching or detaching the lung model (not shown) arranged on the longitudinal partition 3.

### [Embodiment 3]

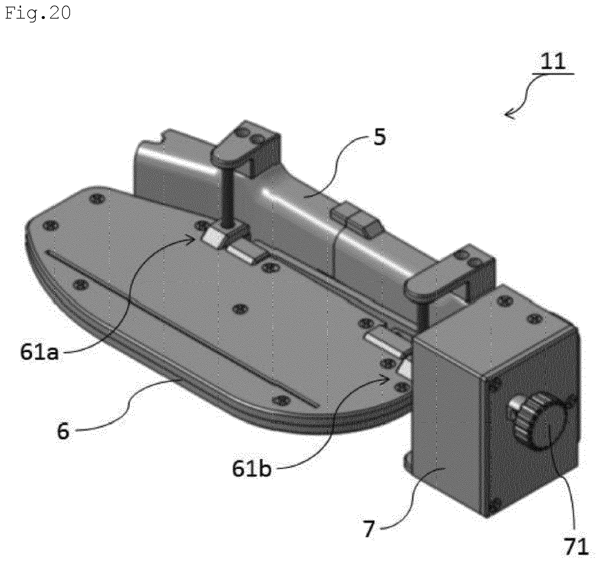

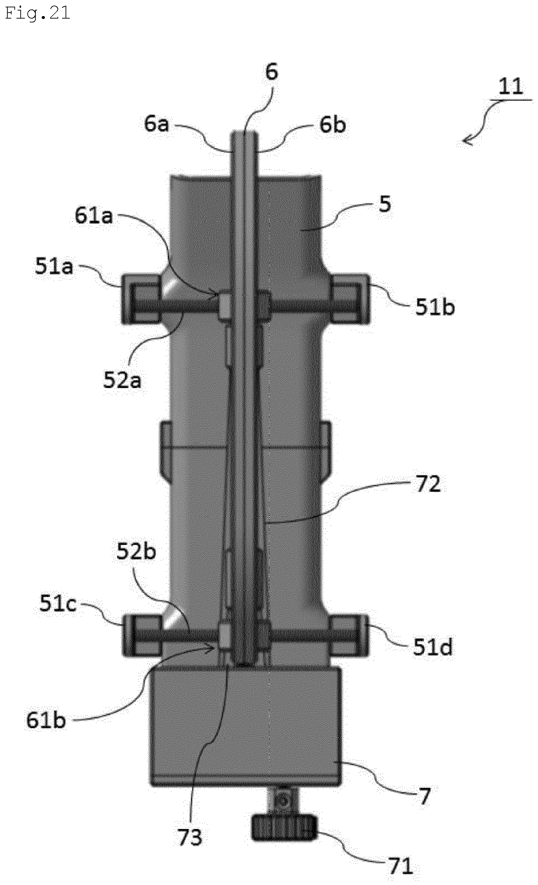

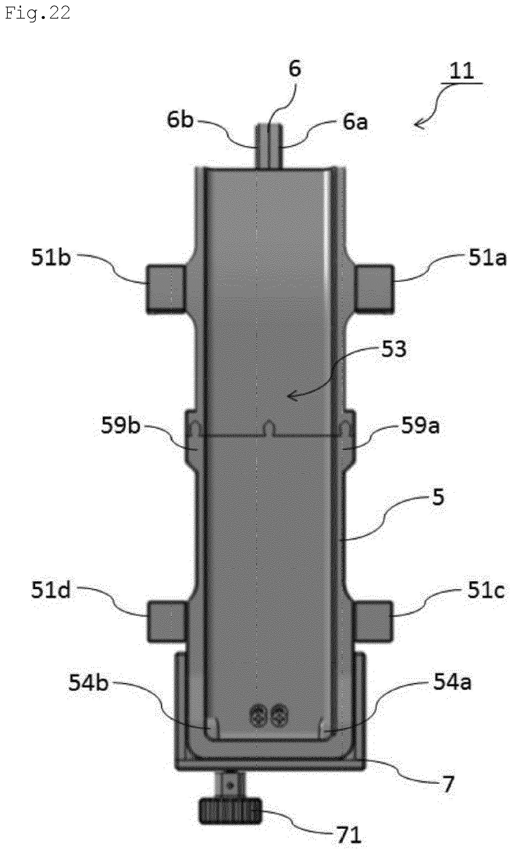

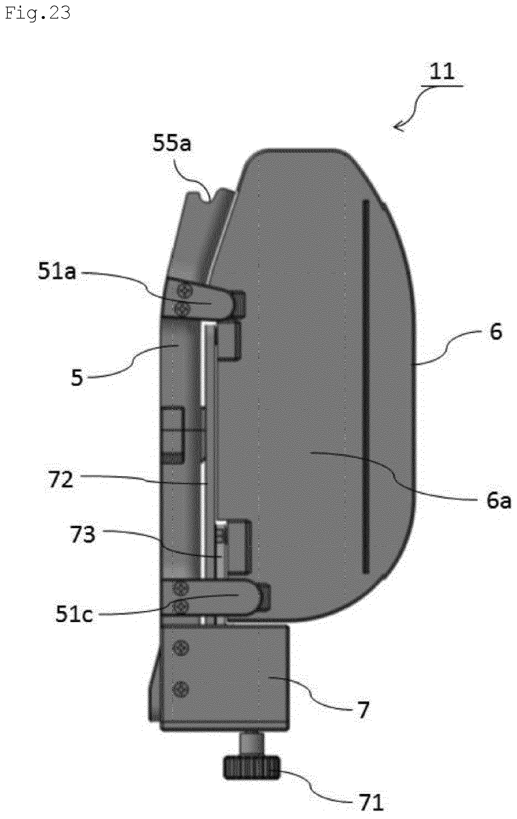

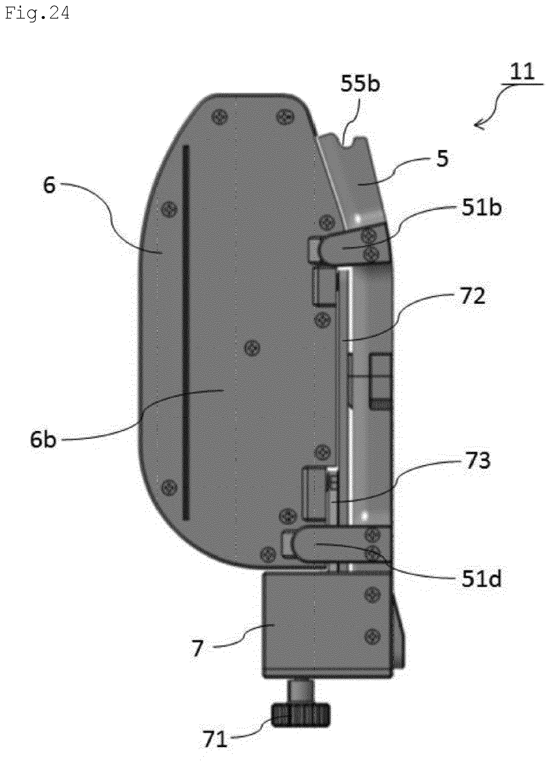

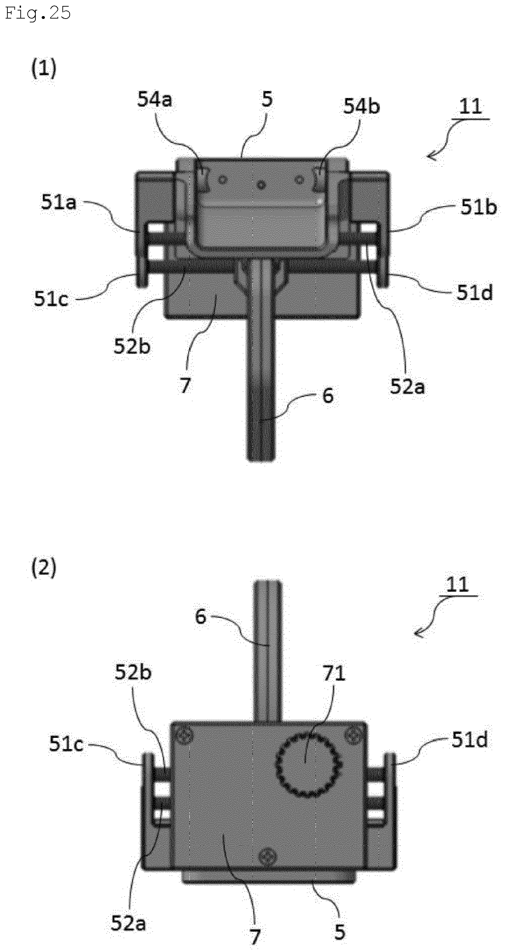

Fig. 20 shows the perspective view of the lung model fixing tool of Embodiment 3. Fig. 21 shows the front view of the lung model fixing tool of Embodiment 3. Fig. 22 shows the rear view of the lung model fixing tool of Embodiment 3. Fig. 23 shows the left side view of the lung model fixing tool of Embodiment 3. Fig. 24 shows the right side view of the lung model fixing tool of Embodiment 3. Further, Fig. 25 is the external view of the lung model fixing tool of Embodiment 3, and Fig. 25 (1) shows the plan view, Fig. 25 (2) shows the bottom view.

As shown in Fig. 20, the lung model fixing tool 11 composes of the base 5, the longitudinal partition 6, and the arm drive unit 7. As shown in Fig. 21, the base 5 is provided with shaft stoppers (51a to 51d), and the longitudinal partition 6 is formed with through holes (61a, 61b). The shaft members (52a, 52b) are inserted into the through holes (61a, 61b), and both ends thereof are fixed to the shaft stoppers (51a to 51d). Specifically, the shaft member 52a is inserted into the through hole 61a, and both ends thereof are fixed by shaft stoppers (51a, 51b). Further, the shaft member 52b is inserted into the through hole 61b, and both ends thereof are fixed by shaft stoppers (51c, 51d). As a result, the longitudinal partition 6 is slidable in the axial direction of the shaft members (52a, 52b) within the range of the shaft stopper 51a and the shaft stopper 51b, and the shaft stopper 51c and the shaft stopper 51d.

The base 5 is provided with the non-slip mechanisms (59a, 59b) shown in Fig. 22, the recess 53 for attaching to the thoracic cavity simulator 9, the convex engaging parts (54a, 54b) shown in Fig. 25 (1), and the concave engaging parts (55a, 55b) shown in Fig. 23 and Fig. 24. The concave engaging parts (55a, 55b) and the convex engaging parts (54a, 54b) are backbone engagement mechanisms.

The recess 53 is provided for attaching the lung model fixing tool 11 to the thoracic cavity simulator 9, and has the structure in which the backbone portion 94 of the thoracic cavity simulator 9 is fitted into the recess 53. The non-slip mechanisms (59a, 59b) is for facilitating the grasp of the lung model fixing tool 11 during attachment or detachment. The concave engaging parts (55a, 55b) and the convex engaging parts (54a, 54b) are provided for positioning and fixing. The convex engaging part (not shown) provided on the backbone portion 94 of the thoracic cavity simulator 9 and the concave engaging parts (55a, 55b) are engaged, and the concave engaging part (not shown) provided on the backbone portion 94 of the thoracic cavity simulator 9 and the convex engaging parts (54a, 54b) are engaged. Here, the structure of the thoracic cavity simulator 9 is the same as that described in Embodiment 1.

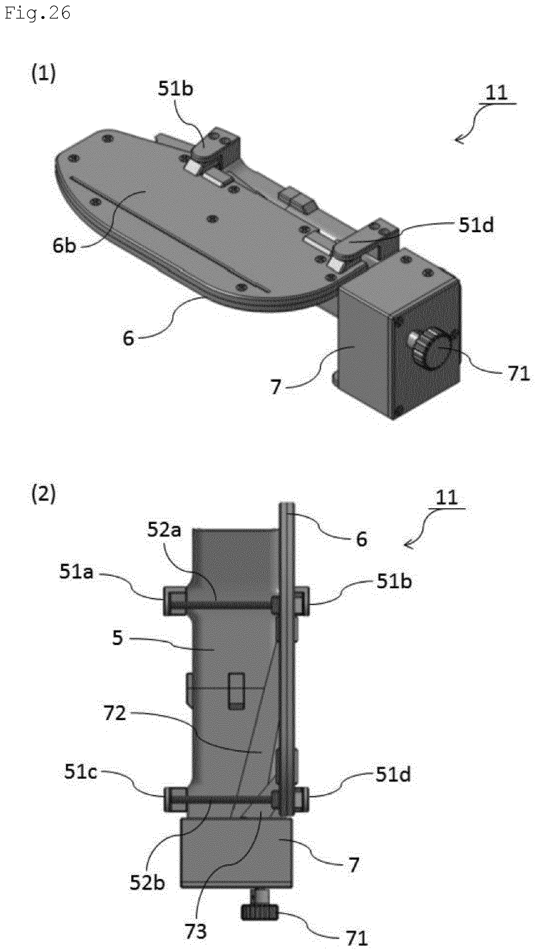

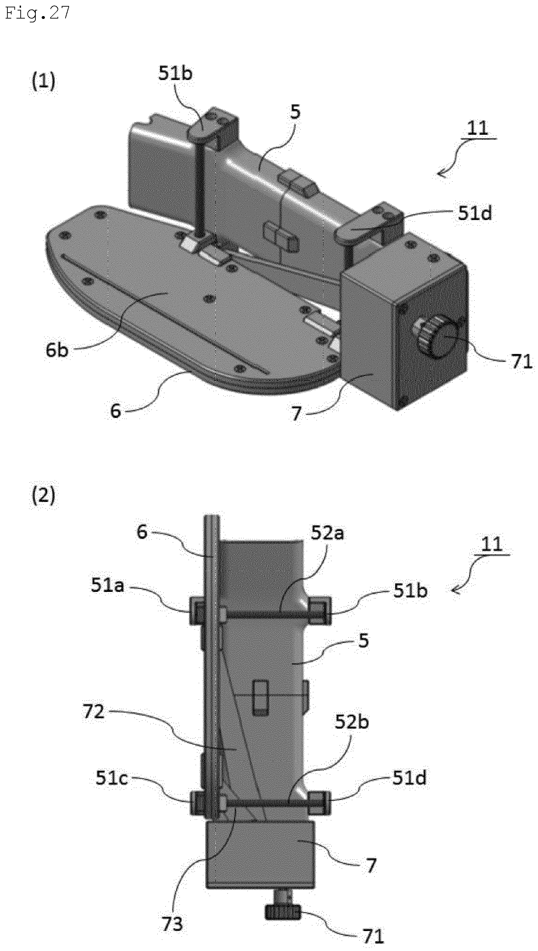

The base 5 is provided with a slide mechanism, and the longitudinal partition 6 is slid by using the slide mechanism. Fig. 26 and Fig. 27 are explanatory views of the slide mechanism, and Fig. 26 shows the case where the longitudinal partition is moved to the right end. Fig. 26 (1) is the perspective view, and Fig. 26 (2) is the front view. Further, Fig. 27 shows the case where the longitudinal partition is moved to the left end, Fig. 27 (1) is the perspective view, and Fig. 27 (2) is the front view.

As shown in Fig. 21, Fig. 26 (2) and Fig. 27 (2), as the slide mechanism, the arm drive unit 7, the knob 71, the arm portions (72, 73), the shaft members (52a, 52b) and the shaft stoppers (51a to 51d) described above are provided. The shaft members (52a, 52b) and the shaft stoppers (51a to 51d) form the guide portion.

Although not shown in Fig. 26 and Fig. 27, a known worm gear is provided inside the arm drive unit 7, and one end of each of the arm portions (72, 73) is connected to the worm wheel (not shown) provided inside the arm drive unit 7, and the other end is connected to the longitudinal partition 6. The knob 71 is provided at the tip of the worm (not shown) which is the screw-shaped gear meshed with the worm wheel. As shown in Fig. 25 (2), the knob 71 is rotatable, and by the user (not shown) rotates the knob 71, it is possible to rotate the end of the arm portions (72, 73) on the surface of the base. Further it is converted into left-right parallel movement by the shaft members (52a, 52b) and the shaft stoppers (51a to 51d).

That is, when the knob 71 is turned counterclockwise in the state shown in Fig. 21, the longitudinal partition 6 can be moved to the right toward via the arm portions (72, 73) as shown in Fig. 26 (2). On the other hand, when the knob 71 is turned clockwise, the longitudinal partition 6 can be moved to the left toward via the arm portions (72, 73) as shown in Fig. 27 (2). The longitudinal partition 6 is fixed at the position where the hand holding the knob 71 is released. Therefore, even if pressure is applied to the right surface 6a or the left surface 6b of the longitudinal partition 6 during training, it is not easily pushed down, so the three-dimensional position of the attached lung model (not shown) is anatomically accurate and the lung model can be supported in accurate place. Here, although an example in which the longitudinal partition 6 is moved to the right end or the left end is shown, the fixed portion is not limited to these, and for example, it is also possible to fix the longitudinal partition 6 at the intermediate between the position of the longitudinal partition 6 shown in Fig. 21 and the position of the longitudinal partition 6 shown in Fig. 26 (2).

As shown in Fig. 20, the longitudinal partition 6 is made of the plate-shaped member and simulates the mediastinum in the human body. The organ model of the right lung can be attached to the right surface 6a of the longitudinal partition 6 shown in Fig. 23, and the organ model of the left lung can be attached to the left surface 6b of the longitudinal partition 6 shown in Fig. 24. This point is the same as in Embodiment 1. As described above, in the longitudinal partition 6, both the right surface 6a and the left surface 6b can be used for fixing the lung model, and the attachment position to the base 5 can be changed, so that the position adjustment of various patterns can be performed.

Fig. 26 (1) and Fig. 27 (1) are perspective views with the left surface 6b of the longitudinal partition 6 as the upper surface in order to perform the procedure training in the right lateral decubitus position. In case of the longitudinal partition 6 is moved to the right toward as shown in Fig. 26 (2), the longitudinal partition 6 moves upward as shown in Fig. 26 (1). And in case of the longitudinal partition 6 is moved to the left toward as shown in Fig. 27 (2), the longitudinal partition 6 moves downward as shown in Fig. 27 (1) .

In this way, it is possible to attach the lung model after adjusting the height of the longitudinal partition 6 by turning the knob 71. As shown in Fig. 23 and Fig. 24, both the right surface 6a and the left surface 6b of the longitudinal partition 6 are not provided with the hook-and-loop fasteners, but can be provide with the same members as the hook-and-loop fasteners (3a, 3b) shown in Embodiment 1.

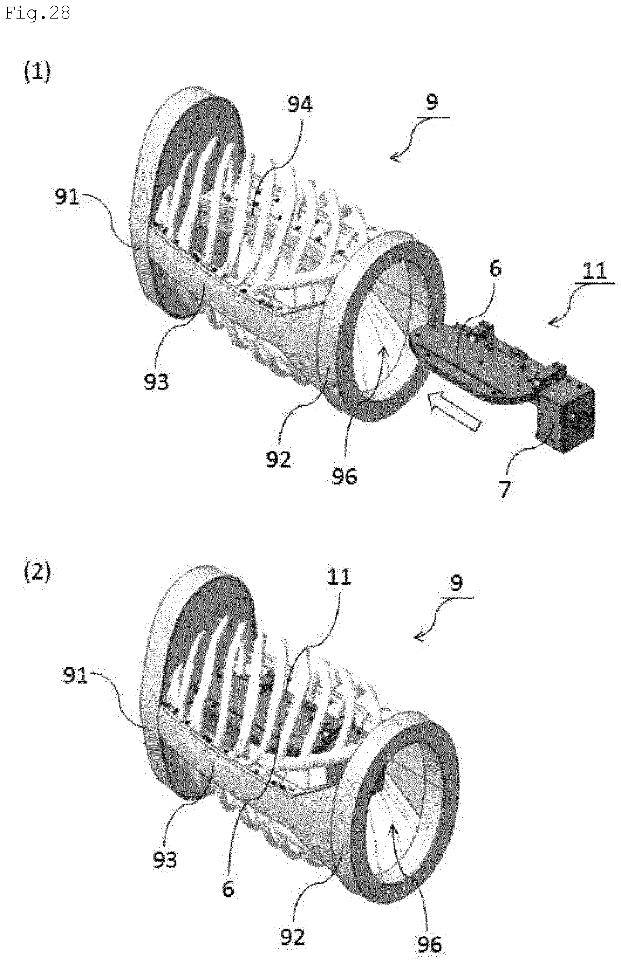

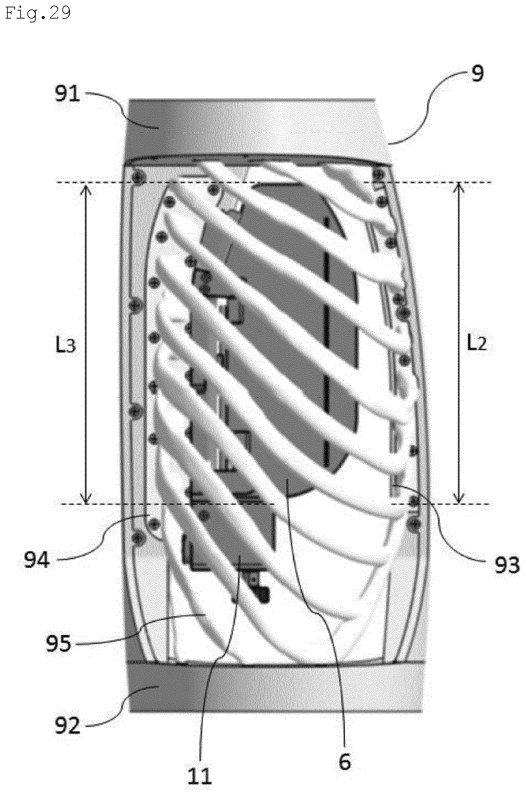

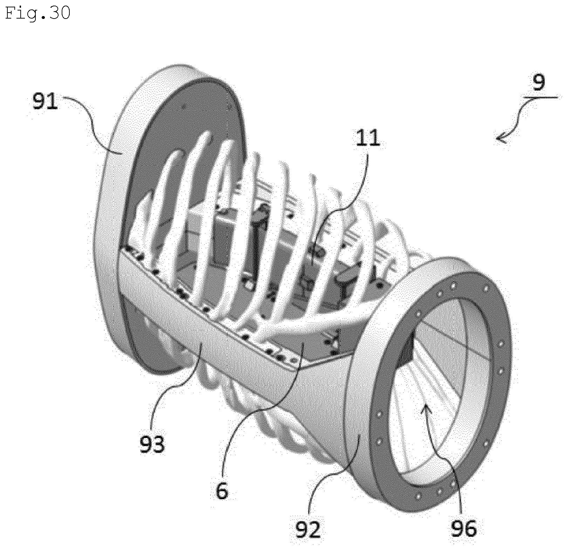

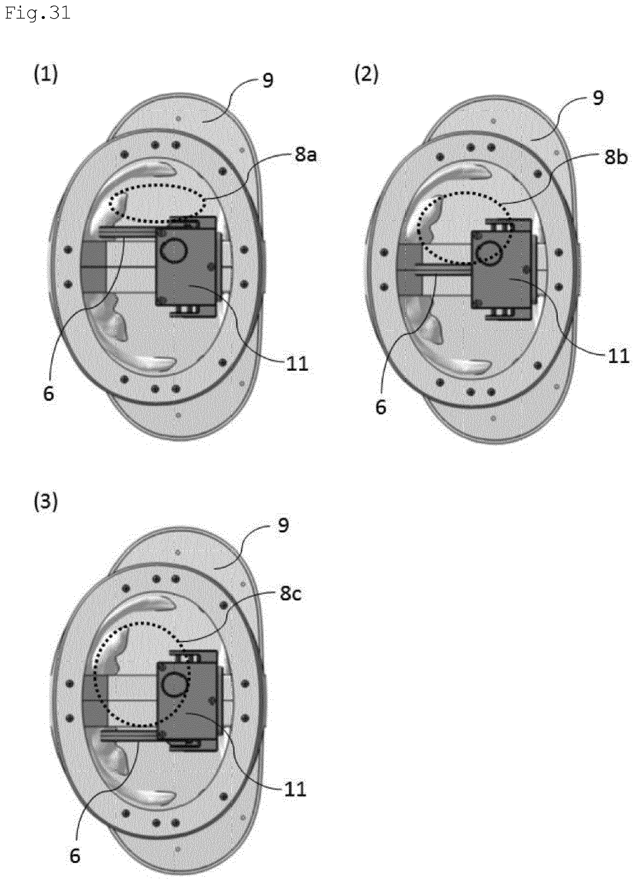

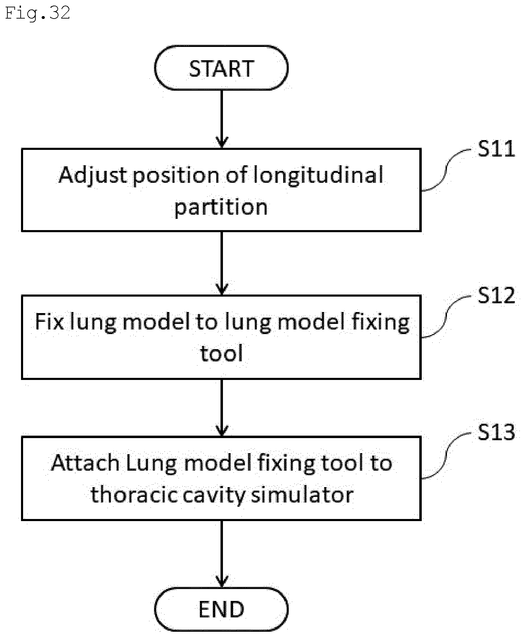

Here, a method of using the lung model fixing tool of Embodiment 3 will be described. Fig. 28 is the explanatory view of attachment of the lung model fixing tool of Embodiment 3 to the thoracic cavity simulator, in which Fig. 28 (1) shows the state before attachment and Fig. 28 (2) shows the state after attachment. Fig. 29 and Fig. 30 are external views showing the state after attachment of the lung model fixing tool of Embodiment 3. Fig. 30 shows the perspective view of the state where the longitudinal partition is lowered. Fig. 31 shows the image diagram showing the state after attachment of the lung model fixing tool of Embodiment 3. In addition, Fig. 32 shows the flow chart of use of the lung model fixing tool of Embodiment 3.

As shown in Fig. 32, first, the position of the longitudinal partition 6 in the lung model fixing tool 11 is adjusted according to the content of the procedure training (step S11). As will be described later, the position of the longitudinal partition 6 can be adjusted even after the longitudinal partition is attached to the thoracic cavity simulator 9, so that the rough adjustment may be made here. Next, the lung model (not shown) is fixed to the lung model fixing tool 11 (step S12) .

Then, as shown in Fig. 28 (1) and Fig. 28 (2), the lung model fixing tool 11 is inserted into the thoracic cavity simulator 9 through the through hole 96, and the lung model fixing tool 11 is attached to the backbone portion 94 (step S13). The thoracic cavity simulator 9 used is the same as that described in Embodiment 1. As shown in Fig. 29, the length L3 of the longitudinal partition 6 in the lung model fixing tool 11 is substantially the same as the length L2 of the breast bone portion 93.

In the examples shown in Fig. 28 (1) and Fig. 28 (2), the longitudinal partition 6 of the lung model fixing tool 11 is fixed in the state of being moved to the position where it comes into contact the shaft stoppers (51b, 51d) as same as in case of shown in Fig. 26 (1) and Fig. 26 (2), and the longitudinal partition is attached to the thoracic cavity simulator 9. Therefore, as shown in Fig. 31 (1), the space 8a is formed relatively narrowly in case of the lung model fixing tool 11 is attached to the thoracic cavity simulator 9.

On the other hand, in the example shown in Fig. 30, the longitudinal partition 6 of the lung model fixing tool 11 is fixed in the state of being moved to the position where it comes into contact the shaft stoppers (51a, 51c) as same as in case of shown in Fig. 27 (1) and Fig. 27 (2). Therefore, as shown in Fig. 31 (3), the space 8c is formed relatively widely in case of the lung model fixing tool 11 is attached to the thoracic cavity simulator 9. Similarly, for example, in case of the space wider than the space 8a and narrower than the space 8c is desired, by adjusting and fixing the longitudinal partition 6 to the position of the middle stage as shown in Fig. 31 (2), it is possible to form the space 8b that is wider than the space 8a and narrower than the space 8c. In this way, by adjusting the position of the longitudinal partition 6, the space required for the procedure can be freely set, and more realistic training assuming actual surgery is possible.

The through hole 96 is formed in the thoracic cavity simulator 9, and the arm drive unit 7 is provided on the lower end 92 side of the thoracic cavity simulator 9 in case of the lung model fixing tool 11 is attached to the thoracic cavity simulator 9. Therefore, even after the lung model fixing tool 11 is attached to the thoracic cavity simulator 9, the position of the longitudinal partition 6 can be adjusted by turning the knob 71. Since it can be adjusted not only before attachment to the thoracic cavity simulator 9 but also after attachment, the surgeon or assistant inserts the hand through the through hole 96 to fine-tune the position of the longitudinal partition 6 during the procedure training. So, it is possible to reproduce the environment in the body cavity that is close to the actual surgery.

### [Embodiment 4]

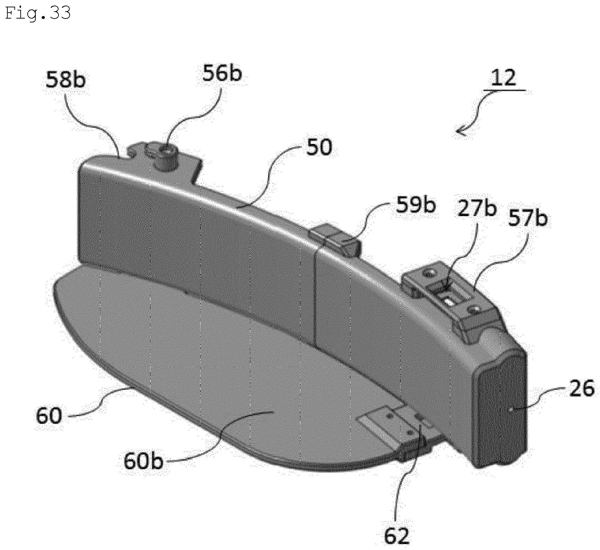

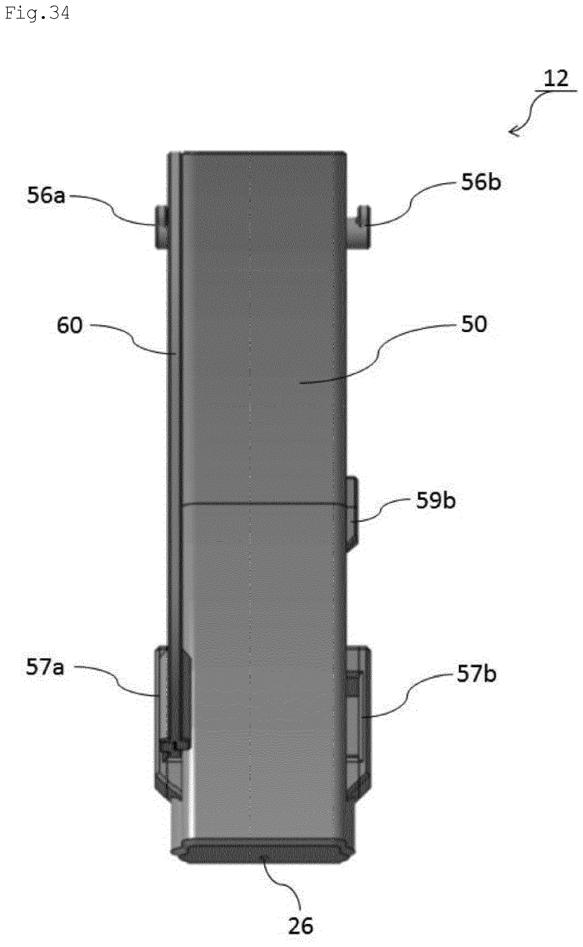

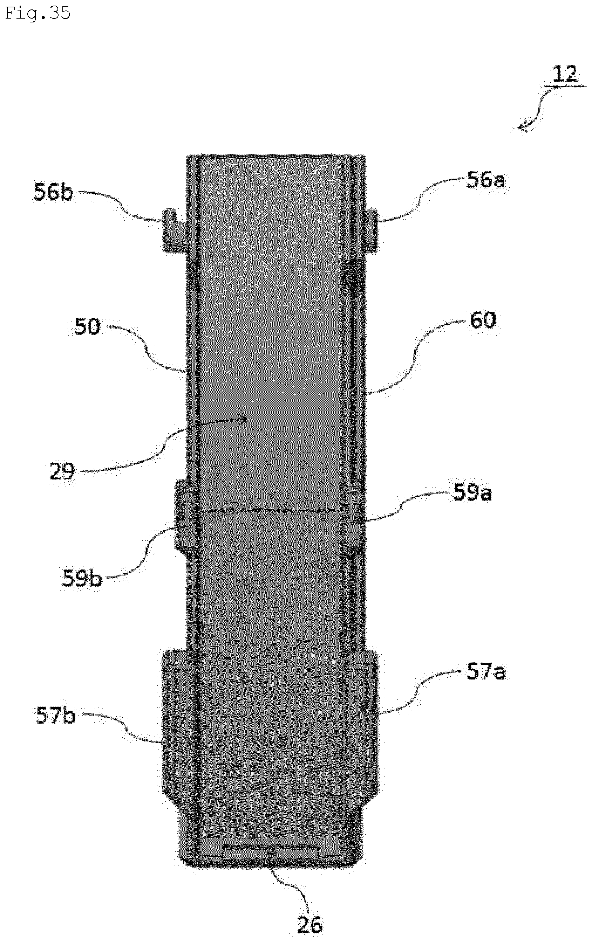

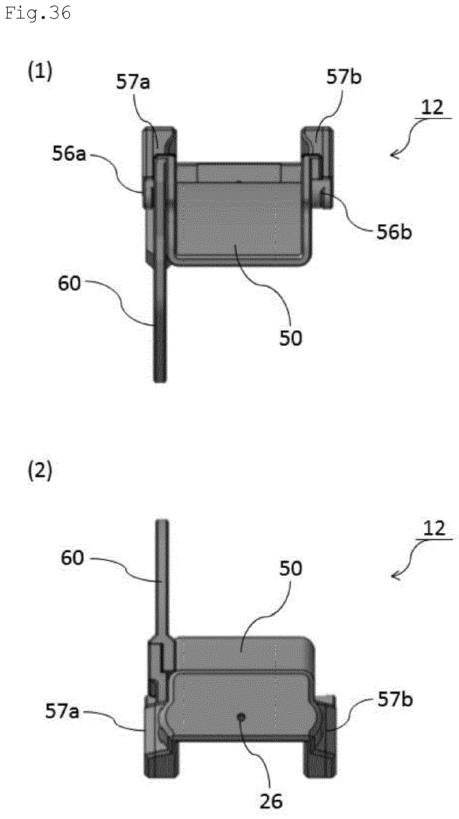

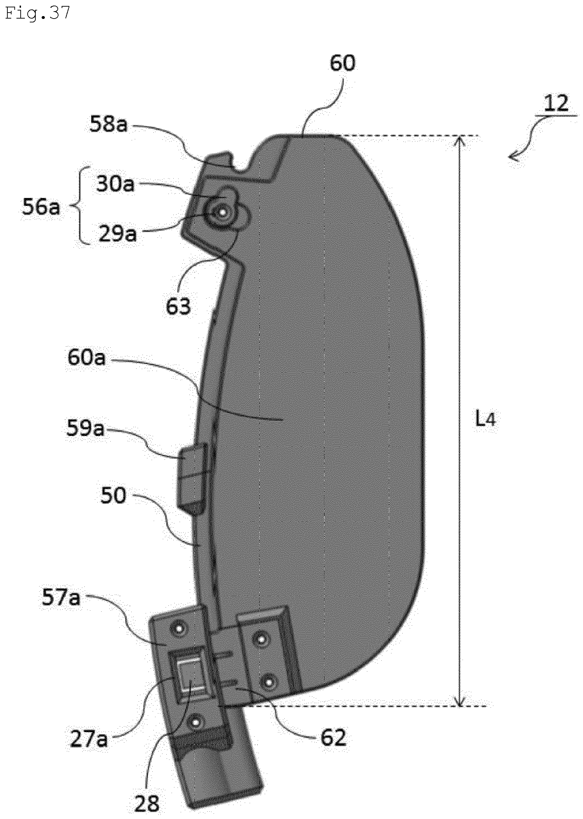

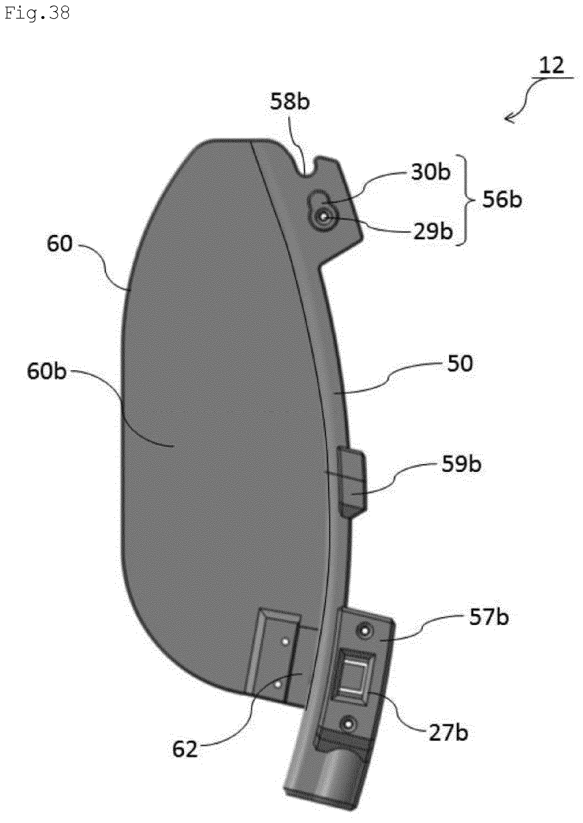

Fig. 33 shows the perspective view of the lung model fixing tool of Embodiment 4. Fig. 34 shows the front view of the lung model fixing tool of Embodiment 4. Fig. 35 shows the rear view of the lung model fixing tool of Embodiment 4. Fig. 36 is the external view of the lung model fixing tool of Embodiment 4, Fig. 36 (1) is the plan view, and Fig. 36 (2) is the bottom view. Fig. 37 shows the left side view of the lung model fixing tool of Embodiment 4. Fig. 38 shows the right side view of the lung model fixing tool of Embodiment 4.

As shown in Fig. 33, the lung model fixing tool 12 is composed of the base 50 and the longitudinal partition 60, and both the base 50 and the longitudinal partition 60 are made of resin. As shown in Fig. 34 and Fig. 36, the longitudinal partition 60 is detachably attached to the base 50.

As shown in Fig. 35, the base 50 is provided with fasteners (56a, 56b) and concave fitting parts (57a, 57b) as the mechanism for attaching the longitudinal partition 60. In this embodiment, as shown in Fig. 37, the longitudinal partition 60 is fixed by the fastener 56a and the concave fitting part 57a.

The fastener 56a has the structure in which the rotating claw 30a is provided on the shaft 29a, and the rotating claw 30a is rotated and fixed around the shaft 29a. In case of attaching the longitudinal partition 60, the direction of the rotating claw 30a is adjusted according to the shape of the through hole 63 formed in the longitudinal partition 60, and then the rotating claw 30a and the through hole 63 are fitted. After that, the direction of the rotating claw 30a is adjusted to the position deviated from the shape of the through hole 63. Next, the concave fitting part 57a provided on the base 50 and the convex fitting part 62 provided on the longitudinal partition 60 are fitted each other. In case of the concave fitting part 57a and the convex fitting part 62 are fitted, the claw part 28 provided in the convex fitting part 62 is caught to the window part 27a provided in the concave fitting part 57a and fixed.

In case of releasing the fixed state, the claw part 28 is pressed from the window part 27a, and the convex fitting part 62 is pulled out from the concave fitting part 57a. Further, with respect to the fastener 56a, the longitudinal partition 60 can be easily pulled out from the fastener 56a by adjusting the direction of the rotary claw 30a according to the shape of the through hole 63.

In this embodiment, as shown in Fig. 37, the longitudinal partition 60 is fixed by the fastener 56a and the concave fitting part 57a, but unlike this, the longitudinal partition 60 can be fixed by the fastener 56b and the concave fitting part 57b as shown in Fig. 38. In case of the longitudinal partition 60 is fixed with the fastener 56b and the concave fitting part 57b, in the same manner as in the example shown in this embodiment, the through hole 63 is fitted into the fastener 56b, and the claw 30b provided in the shaft portion 29b is rotated and fixed. Further, the concave fitting part 57b has the structure in which the concave fitting part 57b is fitted with the convex fitting part 62 and the claw part 28 is hooked on the window part 27b to be fixed. In this way, the internal space formed when the longitudinal partition 60 is attached to the thoracic cavity simulator 9 can be easily adjusted by changing the fixed portion of the longitudinal partition 60 as needed. Moreover, since the structure is simpler than that of Embodiment 3, it can be produced at low cost.

As shown in Fig. 33, the longitudinal partition 60 is made of the plate-shaped member and simulates the mediastinum in the human body. The organ model of the right lung can be attached to the right surface 60a of the longitudinal partition 60 shown in Fig. 37, and the organ model of the left lung can be attached to the left surface 60b of the longitudinal partition 60 shown in Fig. 38. This point is the same as in the Embodiment 1. In this way, the longitudinal partition 60 can be used with both the right surface 60a and the left surface 60b for fixing the lung model, and the attachment position to the base 50 can be changed, so that the positional adjustment of various patterns can be performed. Although not shown, the length L4 of the longitudinal partition 60 in the lung model fixing tool 12 shown in Fig. 37 is substantially the same as the length L2 of the breast bone portion 93 of the thoracic cavity simulator 9.

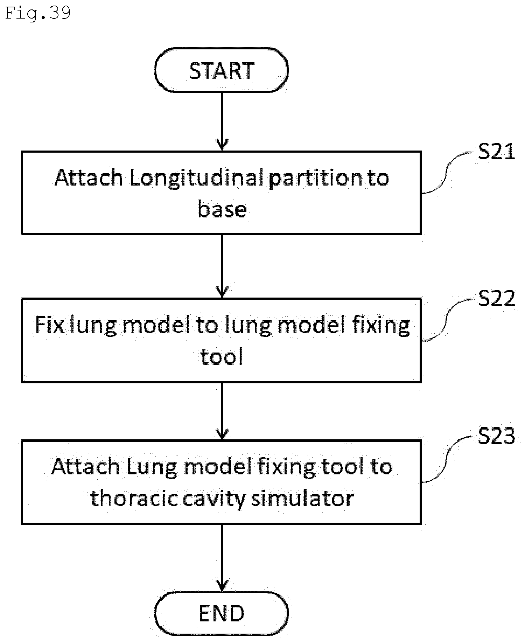

Here, how to use the lung model fixing tool of Embodiment 4 will be described. Fig. 39 shows the flow chart of use of the lung model fixing tool of Embodiment 4. First, the longitudinal partition 60 is attached to the base 50 (step S21). The method of attaching the longitudinal partition 60 is as described above.

Next, the lung model (not shown) is fixed to the lung model fixing tool 12 (step S22). Although not shown here, hook portions of the hook-and-loop fastener can be provided on the right surface 60a and the left surface 60b of the longitudinal partition 60 as in the Embodiment 1. By providing the hook portion of the hook-and-loop fastener, the attachment position of the lung model can be arranged at the appropriate position on the right surface 60a or the left surface 60b.

After fixing the lung model to the lung model fixing tool 12, the lung model fixing tool 12 is attached to the thoracic cavity simulator 9 (step S23). The structure of the thoracic cavity simulator 9 is the same as that described in Embodiment 1.

The base 50 has, for attaching to the thoracic cavity simulator 9, the recess 29 and the non-slip mechanism (59a, 59b) shown in Fig. 35, the concave engaging part 58a shown in Fig. 37, the concave engaging part 58b shown in Fig. 38, and the female screw part 26 shown in Fig. 36 (2). The concave engaging parts (58a, 58b) and the female screw part 26 are backbone engaging mechanisms.

The recess 29 is provided for attaching the lung model fixing tool 12 to the thoracic cavity simulator 9, and has the structure in which the backbone portion 94 of the thoracic cavity simulator 9 is fitted into the recess 29. The non-slip mechanisms (59a, 59b) is for facilitating the grasp of the lung model fixing tool 12 during attachment or detachment. The concave engaging parts (58a, 58b) are provided for positioning and fixing, and have the structure in which the convex engaging parts (not shown) provided on the backbone portion 94 of the thoracic cavity simulator 9 and the concave engaging parts (58a, 58b) are engaged with each other. The female screw part 26 is provided to fix the lung model fixing tool 12 and the backbone portion 94 using the screw (not shown) after the backbone portion 94 of the thoracic cavity simulator 9 and the lung model fixing tool 12 are engaged with each other.

The lung model may be fixed to the lung model fixing tool 12 (step S22) after the lung model fixing tool 12 is attached to the thoracic cavity simulator 9 (step S23). Further, the fixed position of the lung model can be adjusted with the lung model fixing tool 12 attached to the thoracic cavity simulator 9, or the lung model fixing tool 12 may be once removed from the thoracic cavity simulator 9 for adjustment and reattach itself.

### (Other embodiments)

The base 50 of the lung model fixing tool 11 of Embodiment 3 may be provided with a mechanism capable of fixing the lung model fixing tool 11 at an arbitrary position on the backbone portion 94. Further, the base 50 of the lung model fixing tool 12 of Embodiment 4 may be provided with a mechanism capable of fixing the lung model fixing tool 12 at an arbitrary position on the backbone portion 94.

### [Industrial Applicability]

The present invention is useful for training and learning of thoracoscopic surgery, and can be used as an organ fixing tool in a surgery support device and a surgery simulation device.

### [Description of Symbols]

- 1, 10 ~ 12: Lung model fixing tool
- 2, 5, 20, 50: Base
- 3, 6, 60: Longitudinal partition
- 3a, 3b: Hook-and-loop fastener
- 4a, 4b: Lung model
- 6a, 60a: Right surface
- 6b, 60b: Left surface
- 7: Arm drive unit
- 9: Thoracic cavity simulator
- 9a: Right side part
- 9b: Left side part
- 21, 29, 53: Recess
- 22a, 22b, 59a, 59b: Non-slip mechanism
- 23a, 23b, 55a, 55b, 58a, 58b: Concave engaging part
- 24a, 24b, 54a, 54b: Convex engaging part
- 25, 26: Female screw part
- 27a, 27b: Window part
- 28: Claw part
- 29a, 29b: Shaft
- 30a, 30b: Rotating claw
- 51a ~ 51d: Shaft stopper
- 52a, 52b: Shaft member
- 56a, 56b: Fastener
- 57a, 57b: Concave fitting part
- 61a, 61b, 63, 96: Through hole
- 62: Convex fitting part
- 71: knob
- 72, 73: Arm portion
- 91: Upper end
- 92: Lower end
- 93: Breast bone portion
- 94: Backbone portion
- 95: Rib portion
- L: Length

## Claims

1. An organ model fixing tool for fixing the orientation of an organ model with respect to a thoracic cavity simulator that is provided with a human body skeleton model imitating at least the backbones, the breast bones, and the ribs, the organ model fixing tool comprising:
a base that can be housed inside the rib part of the thoracic cavity simulator;
a backbone engaging mechanism that is provided to the backside of the base, and that is to be engaged with a projected part of the backbone part of the thoracic cavity simulator so as to be attached in a slidable manner in the longitudinal direction of the backbone part;
a longitudinal partition that is provided to the surface of the base so as to partition the base left and right, and
wherein the organ model can be placed on both the left and right surfaces of the longitudinal partition, and the length of the longitudinal partition in the longitudinal direction of the backbone part is roughly equal to that in the longitudinal direction of the breast bone part.

2. The organ model fixing tool for the thoracic cavity simulator according to claim 1, wherein the base provides a slide mechanism capable of sliding the longitudinal partition between the left end and the right end of the surface.

3. The organ model fixing tool for the thoracic cavity simulator according to claim 2, wherein the slide mechanism comprises an arm portion that connects to the longitudinal partition, an arm drive portion that rotates the end portion of the arm portion on the surface of the base, and a guide portion that defines the movement direction and movement range of the longitudinal partition; and said guide portion comprises a shaft member provided on the surface of the base and a shaft stopper for holding both ends of the shaft member, and the shaft member is inserted into a through hole provided in the longitudinal partition.

4. The organ model fixing tool for the thoracic cavity simulator according to claim 1, wherein the base provides an attachment mechanism capable of detachably attaching the longitudinal partition to the left end or the right end of the surface.

5. The organ model fixing tool for the thoracic cavity simulator according to claim 1, wherein the longitudinal partition has hook-and-loop fasteners formed on both the left and right surfaces thereof.

6. The organ model fixing tool for the thoracic cavity simulator according to any one of claims 1 to 5, wherein the longitudinal partition loads the organ model on the right side thereof in case of the posture of the thoracic cavity simulator is in the left lateral decubitus position, and loads the organ model on the left side thereof in case of the posture of the thoracic cavity simulator is in the right lateral decubitus position.

7. The organ model fixing tool for the thoracic cavity simulator according to any one of claims 1 to 6, wherein the organ model is a biological texture organ model of the lung that at least reproduces the shape and texture of the lung.

8. The organ model fixing tool for the thoracic cavity simulator according to any one of claims 1 to 7, wherein the backbone attachment mechanism is provided with a concave portion or a convex portion that can adjust the attachment position on the backbone portion in a stepwise manner.

9. The organ model fixing tool for the thoracic cavity simulator according to claim 1, wherein the base, the backbone engagement mechanism, and the longitudinal partition are integrally molded with resin.
